# EUROPEAN PATENT SPECIFICATION

(11) **EP 3 239 887 B1**
(45) Date of publication and mention of the grant of the patent: **06.06.2018**
(21) Application number: 16181134.4
(22) Date of filing: 26.07.2016
(51) Int. Cl.: G06F 21/84, G06F 21/83

(54) **SYSTEM AND METHOD FOR PROTECTING TRANSMISSION OF AUDIO DATA FROM MICROPHONE TO APPLICATION PROCESSES**
SYSTEM UND VERFAHREN ZUM SCHUTZ VON AUDIODATENÜBERTRAGUNG VOM MIKROFON ZU ANWENDUNGSPROZESSEN
SYSTÈME ET PROCÉDÉ DE PROTECTION DE TRANSMISSION DE DONNÉES AUDIO PROVENANT D'UN MICROPHONE POUR DES PROCESSUS D'APPLICATION

(30) Priority: 25.04.2016 RU 2016116002; 05.07.2016 US 201615201887
(43) Date of publication of application: 01.11.2017
(73) Proprietor: AO Kaspersky Lab, Moscow 125212 (RU)
(72) Inventor: LEVCHENKO, Vyacheslav I., Moscow 125212 (RU); KALININ, Alexander V., Moscow 125212 (RU)
(74) Representative: Sloboshanin, Sergej

(56) References cited:
- EP-A2- 2 573 702
- US-A1- 2005 198 061
- US-A1- 2014 068 704
- US-B1- 8 463 612

## Description

### Field of Technology

The disclosure herein generally relates to the protection against loss of data, and more particularly, to a system, a method and a computer program product of protecting transmission of audio data from microphone to application process.

### Background

In the modern world, users encounter many cyber threats, one of which is unauthorized access to the user's microphone for the purpose of eavesdropping. In order to realize a control of access to the microphone data on the part of processes running on the user's computer it is necessary to perform a filtration of certain requests within the operating system or obtain access to the context of the request data for identification of the processes requesting access, in order to block those processes for which access has not been authorized. In the Windows XP and older operating systems, this functionality has been resolved by intercepting traffic in the region of the "KSmixer.sys" kernel component (the Windows Kernel Streaming technology). Requests to read microphone data in the framework of the traffic being intercepted have gone through a special filter in the context of the process reading the microphone data.

With the advent of Windows Vista, a new architecture WASAPI was developed, consisting of many kernel components and a user mode where the Windows Kernel Streaming technology has remained in the "basic variant", while all of the audio traffic has been put through private COM interfaces of new audio drivers, which are registered on the port driver "portcls.sys". These audio drivers can be realized such that the audio traffic with the help of a Direct Access Memory (DMA) controller ends up at once in the user mode buffer, that is, without the involvement of the processor or any supplemental code. And this buffer is mapped into a protected process "audiodg.exe", from which the data is copied by the processor into the buffer of the user process in the context of this same process "audiodg.exe". That is, the controlling filter in the Windows Kernel Streaming technology has become absolutely unsuitable, starting with Windows Vista.

Document US 2014/068704 A1 refers to an apparatus for mitigating unauthorized access to data traffic, which apparatus comprises: an operating system stack to allocate unprotected kernel transfer buffers; a hypervisor to allocate protected memory data buffers, where data is to be stored in the protected memory data buffers before being copied to the unprotected kernel transfer buffers; and an encoder module to encrypt the data stored in the protected memory data buffers, where the unprotected kernel transfer buffers receive a copy the encrypted data.

Further, US 2005/198061 A1 discloses a method to determine whether there is an attempt by a device to access data representing music. If there is such an attempt by the device, one of various actions may be performed, such as providing an offer to purchase an item. Determining whether there is such an attempt by the device may include reading data and determining whether the read data includes data representing music.

Due to the foregoing, the need arises for a method which is able to intercept audio traffic from microphones linked to the context of the processes reading the data from the microphones in order to protect transmission of audio data.

### Summary

Disclosed are a systems, a method and a computer program product for preventing unauthorized access to audio data by protecting transmission of audio data from a microphone to application processes on a computer.

According to one example, a method is provided for preventing unauthorized access to audio data. According to this aspect, the method includes receiving, by a processor of the computer, a request from one software process of a plurality of software processes to obtain an audio stream from an audio endpoint device; allocating, by the processor, a data buffer of a plurality of data buffers for the one software process; processing and encrypting audio data received from the audio endpoint device by at least one audio processing object, wherein the audio data associated with the requested audio stream; storing, by the processor, the encrypted audio data in the allocated data buffer; installing an interceptor of a API function call for the one software process; and decrypting the encrypted audio data from the allocated data buffer by the one software process using the interceptor of the API function call.

According to another example, the method further includes receiving, by a processor of the computer, a plurality of requests from the plurality of software processes, respectively, to obtain audio streams from one or more audio endpoint devices including the audio endpoint device; allocating, by the processor, the plurality of data buffers for the plurality of software processes; encrypting audio data associated with each of the requested audio streams; storing the encrypted audio data for each of the requested audio streams in the allocated data buffer, respectively; and decrypting the encrypted audio data for each of the requested audio streams by at least a portion of the plurality of software processes that have been configured with a respective interceptor of a API function call.

According to another example, the method further includes determining, by the processor, process identifier data for the one software process; determining, by the processor, whether the one software process requesting to obtain the audio stream is an unauthorized software process based on the process identifier data; and installing the interceptor of the API function call for the one software process only if the processor determines that the one software process is not an unauthorized software process.

According to another example, the determining of whether the software process requesting to obtain the audio stream is an unauthorized software process comprises at least one of: monitoring activities of the requesting process to determine whether the process is trusted or not trusted; scanning the requesting process by accessing a database of signatures of known viruses and comparing a signature of the requesting process; and receiving, from a user, a command whether to grant access to the audio stream by the requesting process.

According to another example, the method further includes directly storing the audio data received from the audio endpoint device in a separate data buffer; and only granting access to the audio data by the one software process after the audio data has been encrypted and the process identifier data indicates the one software process is not an unauthorized software process.

According to another example, the method further includes the processing of the audio data device by the at least one audio processing object comprises processing the audio data by a global effects audio processing object allocated for the plurality of software processes and a local effects audio processing object associated with the one software process.

According to another example, the method further includes the encrypting of the audio data comprises encrypting the audio data by one of a symmetrical encryption algorithm and an asymmetrical encryption algorithm.

According to another example, a system is provided for preventing unauthorized access to audio data. According to this aspect, the system includes a plurality of data buffer in an electronic memory; and a processor configured to: receive a request from one software process of a plurality of software processes to obtain an audio stream from an audio endpoint device; allocate a data buffer of the plurality of data buffers for the one software process; process and encrypt audio data received from the audio endpoint device by at least one audio processing object, wherein the audio data associated with the requested audio stream; store the encrypted audio data in the allocated data buffer; install an interceptor of a API function call for the one software process; and decrypt the encrypted audio data from the allocated data buffer by the one software process using the interceptor of the API function call.

The above simplified summary of example aspects serves to provide a basic understanding of the present disclosure. This summary is not an extensive overview of all contemplated aspects, and is intended to neither identify key or critical elements of all aspects nor delineate the scope of any or all aspects of the present disclosure. Its sole purpose is to present one or more aspects in a simplified form as a prelude to the more detailed description of the disclosure that follows. To the accomplishment of the foregoing, the one or more aspects of the present disclosure include the features described and exemplary pointed out in the claims.

### Brief Description of the Drawings

The accompanying drawings, which are incorporated into and constitute a part of this specification, illustrate one or more example aspects of the present disclosure and, together with the detailed description, serve to explain their principles and implementations.
**Fig. 1** illustrates a high-level model of Windows Audio Stack.
**Fig. 2** illustrates a block diagram of an example of audio subsystem for preventing unauthorized access to audio data.
**Fig. 3** illustrates another block diagram of an example of audio subsystem for preventing unauthorized access to audio data.
**Fig. 4** illustrates a flowchart of an example of method of preventing unauthorized access to audio data.
**Fig. 5** illustrates another block diagram of an example of an audio subsystem for preventing unauthorized access to audio data.
**Fig. 6** illustrates a flowchart of an example of method of protected transmission of audio data from a microphone to processes.
**Fig. 7** illustrates an example of a general-purpose computer system on which the disclosed systems and method can be implemented.

### Detailed Description

Example aspects are described herein in the context of a system, method and computer program product for preventing unauthorized access to audio data by protecting transmission of audio data from microphone to application process. Those of ordinary skill in the art will realize that the following description is illustrative only and is not intended to be in any way limiting. Other aspects will readily suggest themselves to those skilled in the art having the benefit of this disclosure. Reference will now be made in detail to implementations of the example aspects as illustrated in the accompanying drawings. The same reference indicators will be used to the extent possible throughout the drawings and the following description to refer to the same or like items.

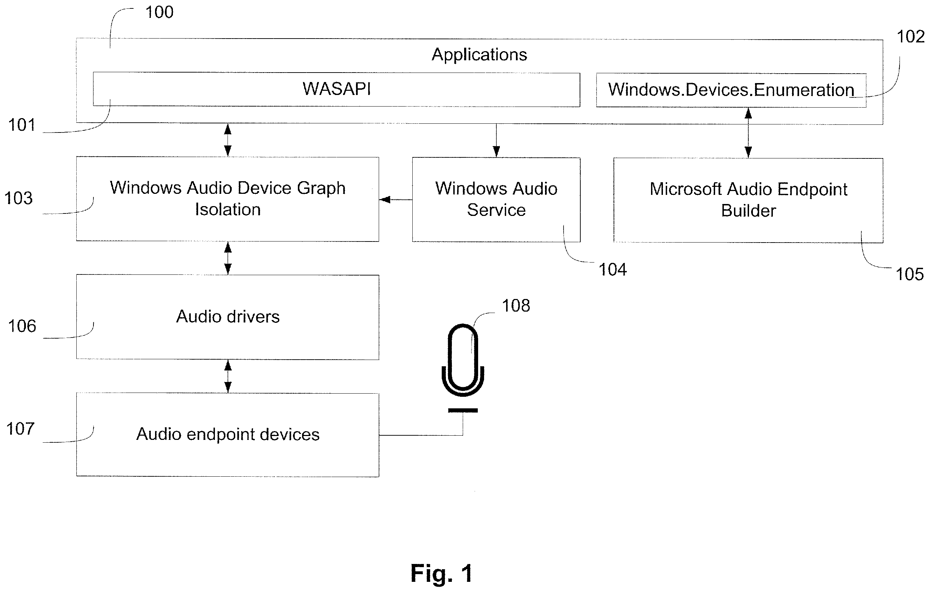

To increase the reliability and simplify the development of applications working with audio data, Microsoft has significantly redeveloped the audio stack, which is used in modern operating systems starting with Windows Vista. **Fig. 1** shows a high-level model of the new audio stack. The basic components of this model are listed and described below. The list of components given in **Fig. 1** is not exhaustive, but only includes those components which are used in the context of the present disclosure or are essential to an understanding of the principles of working with audio data in the context of the new audio stack model.

The Windows Audio Session API ("WASAPI" **101**) are software interfaces allowing a control of the audio data streams between applications **100** and audio endpoint devices **107.** For purposes of this disclosure, the term "audio endpoint device", "audio terminal device" or "audio endpoint" are used synonymously and can be considered a microphone, for example, according to one aspect. It should further be appreciated that the microphone may be embedded in the audio adapter that is connected to it, or it can be connected to a USB-adapter or connected to the device, which in turn is connected to the adapter.

In either case, each audio stream is part of an audio session, which is a combination of all audio streams between applications **100** and a specific audio endpoint device **107,** such as a microphone **108.** The Windows operating system makes it possible to process each stream separately within an audio session, and also control certain parameters, such as volume, within the entire audio session. It should be noted that an audio session may be composed solely of audio data rendering streams or audio data capture streams. In the context of the given disclosure, only audio data capture streams are considered. The applications **100** can use the WASAPI software interfaces in two modes: WASAPI Shared and WASAPI Exclusive. The use of the exclusive mode by one application blocks access to the audio endpoint device for all other applications. Use of the shared mode allows the applications **100** to obtain access to one and the same audio endpoint device **107** at the same time. The component Windows Audio Device Graph Isolation **103** is used to organize shared access to audio data arriving from one audio endpoint device **107.**

Windows Audio Device Graph Isolation **103** is an audio stack component designed to transport audio data arriving from an audio endpoint device **107** to applications **100,** and it makes it possible to perform various transformations of the data of audio streams during a single audio session, using only the resources of the central processor. For example, Windows Audio Device Graph Isolation **103** can put audio streams from different applications in the same form, indicated in the Windows settings, that is, the same number of channels, digitization frequency, and degree of quantization, or it can perform a mixing of audio streams, and in the case of an audio data capture stream it can copy it for transmission to several applications **100.** Windows Audio Device Graph Isolation **103** is realized as a protected process "audiodg.exe", launched in user mode.

Windows Audio Service **104** is a service within the Windows operating system which is designed to create and control audio data streams. This audio stack component allows applications **100** to interact with the protected process "audiodg.exe", direct access to which is limited on their part. Windows Audio Service **104** is also a component which realizes the Windows Audio Policy, which includes a set of rules to be applied within the operating system to audio streams which are accessible in the shared mode within an audio session.

The audio drivers **106** are an interlayer within the audio stack model being described, including a combination of various system drivers maintaining the architecture of said audio stock, and also drivers allowing support of components of other manufacturers. For example, for audio adapters connected to the PCI and PCI express buses, system drivers of the "Port Class" (portcls.sys) are provided within the Windows operating system, including a group of port drivers to realize various audio adapter functions. And in the case of an audio adapter connected to a USB bus, system drivers of the "AVStream" class (Ks.sys) and a driver of the "USB Audio" class (Usbaudio.sys) are provided in the Windows operating system. The main characteristic of the new audio stack model realized within the interlayer of audio drivers **106** is the realization of the Microsoft Wave Real Time (WaveRT) technology, which allows the audio endpoint devices to record audio data without the involvement of the central processor directly into a buffer in user mode, from which the data is read by the protected process "audiodg.exe", realizing the Windows Audio Device Graph Isolation component **103.** Access to this buffer from other processes is forbidden and controlled on the part of the operating system.

The audio endpoint devices **107** within the present disclosure are devices situated at one of the ends of the audio data transmission channel, which begins or ends at the application **100.** Examples of audio endpoint devices include, but not limited to, a microphone **108,** headphones, acoustic speakers or a CD player. The audio endpoint devices **107** can be connected to audio adapters or be a part of them.

The Microsoft Audio Endpoint Builder **105** is a service of the Windows operating system designed to detect new audio endpoint devices **107,** and also keep track of and control the existing ones.

Windows.Devices.Enumeration **102** are software interfaces allowing applications **100** to interact with the Microsoft Audio Endpoint Builder service **105** to obtain information on the existing audio endpoint devices **107** and their use for rendering or capture of audio data.

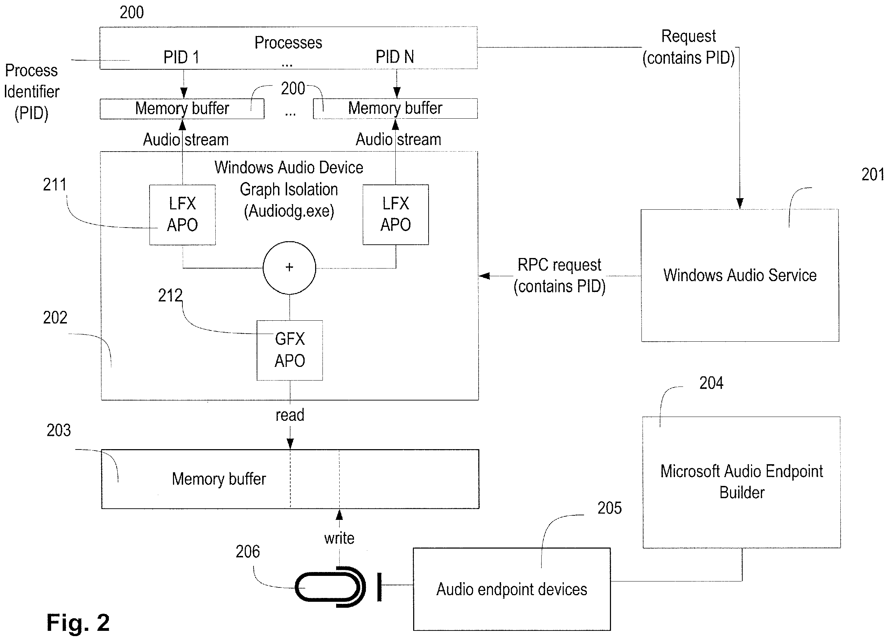

The disclosure now consider certain audio stack components that can be provided in the audio subsystem of the Windows operating system, within which the given invention is realized. Specifically, **Fig. 2** illustrates a block diagram of an example of audio subsystem for preventing unauthorized access to audio data. As shown, this diagram describes a scenario in which processes **200** are provided access in shared mode (WASAPI Shared) within an audio session including audio data capture streams being received from an audio endpoint device, being the microphone **206.** In the context of this diagram, the concept of processes **200** are considered by which is meant the applications being executed at the given moment. If an application is a passive set of instructions, a process is the immediate execution of these instructions. Each process has a unique identifier, the Process ID (in short, PID), by which the given process can be identified.

The main difficulty in the realization of the system and method of preventing unauthorized access to microphone data is the fact that all audio streams circulating between the processes and the audio endpoint device are the context of a single protected process "audiodg.exe" which realizes the Windows Audio Device Graph Isolation component 202. Since the process is protected, that is, the are access rights restrictions in regard to this process, interaction with this process by the use of standard API functions of the user mode is not possible when performing many operations. Thus, another process using standard API functions of the user mode cannot request information about the internal data of the process "audiodg.exe". For the interaction of each of the processes **200** with the protected process "audiodg.exe" realizing the Windows Audio Device Graph Isolation component **202,** the Windows Audio Service **201** of the operating system creates a special cross-process buffer **200,** through which audio data is transmitted from one of the audio endpoint devices **205,** such as the microphone **206.** As mentioned above, keeping track and adding of audio endpoint devices **205** is done with the help of the Windows Microsoft Audio Endpoint Builder service **204** of the operating system.

The interaction of the audio endpoint device, such as the microphone **206,** with the protected process audiodg.exe **202** also occurs through a special buffer **203,** accessible in user mode. The audio data goes to the buffer **203** directly from the microphone **206** without involvement of the central processor, and then is read by the Windows Audio Device Graph Isolation component **202,** and vice versa, it is processed only with the use of resources of the central processor, that is, by software, without the involvement of the resources of the audio adapters to which the audio endpoint devices **205** are connected or of which they form a part.

Before the audio data which has been read from the buffer **203** will be transmitted to the processes **200,** it is subjected to processing by the Windows Audio Device Graph Isolation component **202.** The main tasks of the Windows Audio Device Graph Isolation component **202** are the transport of audio data arriving from an audio endpoint device, the microphone **206,** to the processes **100,** and the performance of various transformations of the data of the audio streams in the course of a single audio session. The transformations of the data of the audio streams are done with the help of miniport drivers of the aforementioned WaveRT technology, which are known as Audio Processing Objects (APO). One distinguishes two types of audio processing objects: global effects, abbreviated GFX APO **212,** and local effects, abbreviated LFX APO **211.**

According to one aspect, the audio engine configures the system-supplied APOs and sAPOs into components called pipes. There are two types of pipes in the audio engine: stream pipes are made up of APOs and sAPOs that perform digital audio processing that is local to the stream from a single application. The sAPO in this type of pipe is referred to as local effects sAPO (LFX sAPO). Device pipes are made up of APOs and sAPOs that perform digital audio processing that affects all the streams globally. The sAPO in this type of pipe is called a global effects sAPO (GFX sAPO).

In the context of an audio session, including audio data capture streams, global effects audio processing objects GFX APO **112** are used for the incoming audio stream received from the microphone **206.** Then, for each process **200** having requested the creation of an audio stream from the Windows Audio Service **201,** the creation of an independent audio stream is done by the Windows Audio Device Graph Isolation component **202** by copying of the incoming stream processed with the aid of the global effects audio processing object GFX APO **112.** Each independent audio stream corresponds to a single process and is processed with the aid of local effects audio processing objects LFX APO **211.** The number of local effects audio processing objects LFX APO **211** used for each independent audio stream can be the same or different. The nature of the manipulations performed with the data of each independent audio stream with the help of the local effects audio processing objects LFX APO **211** also may differ, since the parameters of the audio data processing objects can be controlled in real time. The local effects audio processing objects LFX APO **211** can be activated individually for each process, which will result in the adding of the local effects audio processing object LFX APO **211** to the audio stream corresponding to the given process. The local effects audio processing objects LFX APO **211** can also be deactivated individually for each process, which will result in the removal of the local effects audio processing object LFX APO **211** from the audio stream corresponding to the given process. The local effects audio processing objects LFX APO **211** are realized in the form of WaveRT miniport drivers, which are installed in the operating system and registered in relation to each specific audio endpoint device **205** by adding the corresponding records to the system registry, after which the local effects audio processing objects LFX APO **211** will be automatically installed by the audio subsystem for the processing of each new audio stream related to an audio endpoint device for which the given local effects audio processing objects LFX APO **211** have been registered.

In order for a process in the shared access mode (WASAPI Shared) to receive access to the audio data arriving from the microphone **206,** it formulates and sends a request to the Windows Audio Service **201.** This request includes various parameters, including the process identifier (PID). The Windows Audio Service **201** formulates and sends an RPC request for the creation of a new data stream to the Windows Audio Device Graph Isolation component **202,** transmitting among the parameters of this RPC request the process identifier (PID) which requested the creation of the audio stream. The Windows Audio Service **201** creates a special cross-process buffer **200,** by which audio data is transmitted from the microphone **206** to the process having requested the creation of the audio stream. The Windows Audio Device Graph Isolation **202** in turn creates an independent audio stream, related to the aforementioned special buffer **200,** through which audio data will be transmitted to the process having requested the creation of the given audio stream. And, finally, the audio subsystem installs the local effects audio processing objects LFX APO **211,** registered for the microphone **206,** for the processing of the created audio stream.

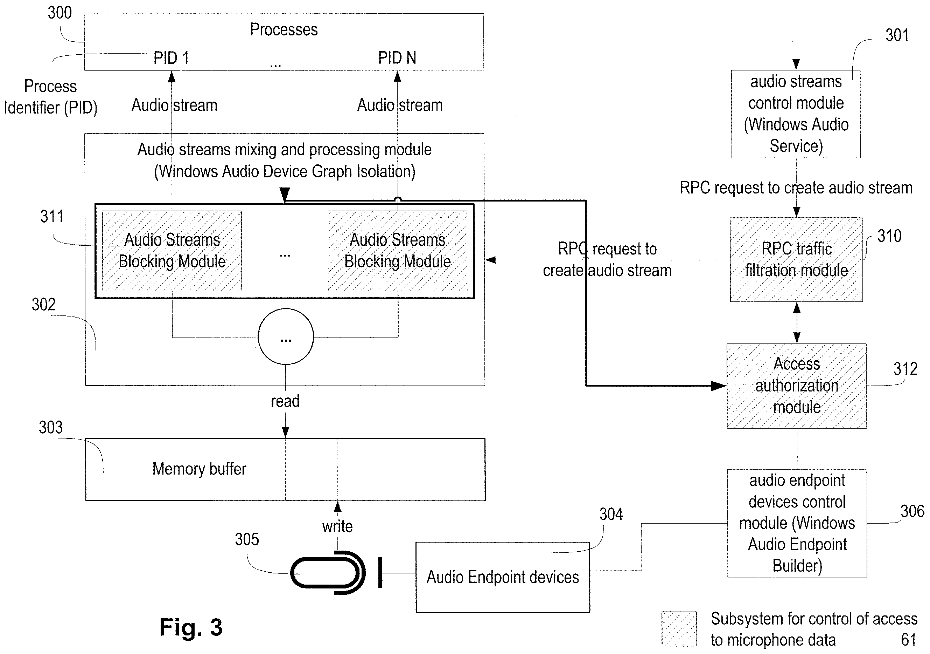

**Fig. 3** illustrates another block diagram of an example of audio subsystem for preventing unauthorized access to audio data. As shown, this system of two subsystems: the above-described audio subsystem, illustrated in **Fig. 2****,** and integrated in said audio subsystem a subsystem for control of access to the microphone data. According to an example, the audio subsystem disclosed herein includes an audio stream control module **301,** with which processes interact via API functions for the creation and control of audio streams, which in one example can be the Windows Audio Service **201.** In addition, an audio streams mixing and processing module **302** is provided that is designed to mix audio streams between applications and audio endpoint devices, and also to process audio streams with the help of filters, which in one example can be the protected process Windows Audio Device Graph Isolation **202.** Moreover, an audio endpoint devices control module 306 is provided for carrying out the adding and keeping track of audio endpoint devices, which in one example can be the Windows Audio Endpoint Builder service **204.**

The subsystem for control of access to microphone data includes the following three components: a RPC traffic filtration module **310,** an audio streams blocking module **311** and an access authorization module **312.** The RPC traffic filtration module **310** is designed to perform a monitoring of RPC traffic between the audio stream control module **301** and the audio streams mixing and processing module **302,** in order to detect RPC requests for creation of audio streams related to an audio endpoint device which is the microphone, and to determine the process identifiers (PID) for which the creation of audio streams is being requested. This system makes it possible to solve the aforementioned problem of identification of processes **300** receiving audio data from the microphone **305,** in that all the audio streams circulating between the processes **300** and the microphone **305** are the context of a single protected process "audiodg.exe" (the audio streams mixing and processing module **302**).

The audio streams blocking module **311** is installed for each new audio stream from the audio session related to the audio endpoint device which is the microphone **305,** as a local effects audio processing object LFX APO **211** inside the audio streams mixing and processing module **302.** In one example, the audio streams blocking module **311** is in the form of a driver, such as a WaveRT miniport driver. The audio subsystem automatically installs the audio streams blocking module **311** for each new audio stream within the audio session related to each audio endpoint device from the group of audio endpoint devices **304** for which the audio streams blocking module **311** is registered as a local effects audio processing object LFX APO **211.** In one example, the automatic installation of the audio streams blocking module **311** mentioned in the previous sentence is done by the audio streams mixing and processing module **302.** After installation, the audio streams blocking module **311** sends a request to the access authorization module **312** to check the authorization of the process in regard to gaining access to the data of the audio stream for which the given audio streams blocking module **311** was installed. To perform the check, the access authorization module **312** receives or requests from the RPC traffic filtration module **310** the process identifier in regard to which said authorization check is being requested. It should be noted that the audio streams blocking module **311** does not possess information as to which process the audio stream for which it has been installed corresponds to. Neither does the RPC traffic filtration module **310** possess such information. The coordination of the request dispatched by the audio streams blocking module **311** with the process identifier obtained by the RPC traffic filtration module **310,** which is equivalent to coordinating the audio stream with the process, is done by the access authorization module **312.**

According to one aspect, the primary purpose of the audio streams blocking module **311** is to prevent access to the audio stream data by an unauthorized process. For this, the audio streams blocking module **311** performs a zeroing of the data of the audio stream for which the process requesting its creation was found to be unauthorized by the access authorization module **312.**

The access authorization module **312** is connected to the RPC traffic filtration module **310** and the audio streams blocking module **311** and is designed to perform a check of the authorization of the processes by the aforementioned process identifiers for access to the data of the audio streams related to the audio endpoint device, such as the microphone **305.** The process authorization module can perform both an independent checking of the authorization of the process to obtain access to the data of the audio streams related to the audio endpoint device from the group of audio endpoint devices **304** and also send requests in regard to the process being checked to other security modules. These modules can include a module for control of activity of processes, designed to regulate actions on the part of the processes, such as access to the file system, to the system registry, or interaction with other processes, dividing up all processes into: trusted, not trusted, processes with weak restrictions and processes with strong restrictions. Moreover, an antivirus module can be provided and designed to look for viruses with the help of a database of signatures (descriptions of known viruses and other malicious applications), and to remove or quarantine the corresponding objects and the data related to them. Furthermore, a threat neutralization module may be provided and used for detecting unwanted content, discovering attacks or threats in real time, taking steps to close down any suspicious processes, block Internet traffic, and also restore the system to its last known safe condition. Furthermore, a user feedback module may be provided, making it possible to alert the user as to all attempts by processes to gain access to the microphone data, so that the user can choose to allow a given process access to the microphone or not, and also to provide the user with the option of blocking access to the microphone by default for all processes.

Thus, the access authorization module **312** can identify a process as unauthorized on the basis of verdicts from outside security modules. For example, a process may be identified as unauthorized if the process is malicious or if the process is not authorized by the user to access the microphone data.

In one example, the access authorization module **312** is connected to the audio endpoint devices control module **306** to follow the adding of a new audio endpoint device to the group of audio endpoint devices **304.** For each new audio endpoint device, the access authorization module **312** performs a registration of the audio streams blocking module **311,** registered as the local effects audio processing object LFX APO **211.** In another example, the access authorization module **312** protects against changing and removal of all records of the system registry in which the audio streams blocking module **311** is listed as the local effects audio processing object LFX APO **211.**

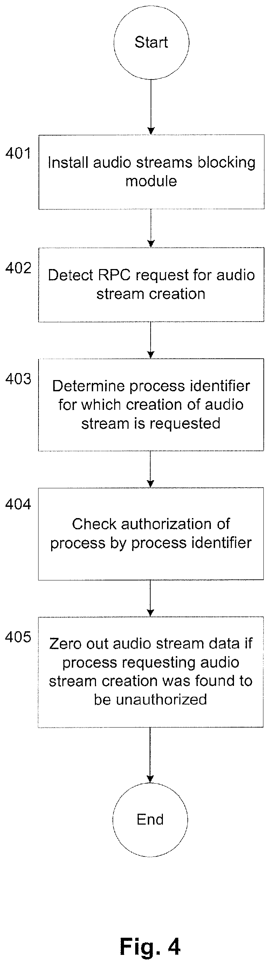

**Fig. 4** illustrates a flowchart for an example of method of preventing unauthorized access to audio data. As shown, in step **401** with the aid of the access authorization module **312** the installation of the audio streams blocking module **311** as the local effects audio processing module LFX APO is performed inside the audio streams mixing and processing module **302** for each audio endpoint device which is a microphone **305,** accounted for by the audio endpoint devices control module **306.** The local effects audio processing module LFX APO is used as the audio streams mixing and processing module **302** for each new audio stream relating to each audio endpoint device which is a microphone **305** for which the given local effects audio processing module LFX APO has been installed.

Next, in step **402,** with the help of the RPC traffic filtration module **310,** RPC traffic between the audio stream control module **301** and the audio streams mixing and processing module **302** is monitored, an RPC request is discovered for creation of an audio stream relating to the audio endpoint device which is the microphone **305,** and the process identifier is determined for which the creation of the aforementioned audio stream is being requested.

During the creation of the new audio stream, the audio streams mixing and processing module **302** applies to it the local effects processing module of audio streams LFX APO which were installed for the audio endpoint device related to the new audio stream. Since in step **401** there was installed for each audio endpoint device which is a microphone an audio streams blocking module **311** as the local effects processing module of audio streams LFX APO, there will be applied to the new audio stream related to the audio endpoint device which is a microphone, in step **403,** the audio streams blocking module **311,** which will send an authorization request to the access authorization module **312** immediately after initialization.

In response to this request, in step **404,** the access authorization module **312** will use the identifier of the process requesting the creation of the audio stream, received in step **402,** to check the authorization of the process to gain access to the data of the mentioned audio stream.

And based on the results of the check in step **405,** the audio streams blocking module **311** zeroes the data of the mentioned audio stream if the process requesting the creation of the mentioned audio stream was found to be unauthorized with the aid of the access authorization module **312.**

The system and method of preventing unauthorized access to microphone data makes it possible to protect the user against audio data leaks occurring as a result of an unauthorized access on the part of processes to the microphone data with the use of mechanisms provided by the audio subsystem within the operating system. However, the aforementioned system and method do not afford protection to the user against audio data leaks occurring as a result of unauthorized access by outside processes to the audio streams arriving at authorized processes. For the protection of audio streams against unauthorized access in the context of the present disclosure, a system and method are realized for a protected transmission of audio data from the microphone to the processes.

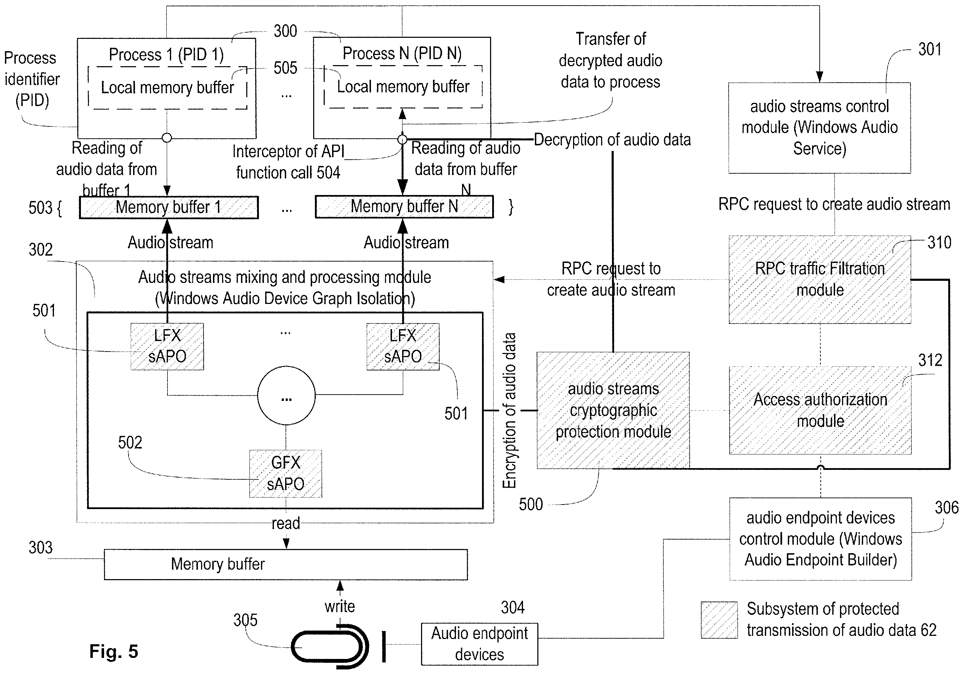

**Fig. 5** illustrates another block diagram of an example of audio subsystem for preventing unauthorized access to audio data. As shown, the system includes two subsystems: the above-described audio subsystem, depicted in **Fig. 2****,** and integrated with it a subsystem for protected transmission of audio data **62.** As shown, the audio subsystem includes the audio stream control module **301,** an audio streams mixing and processing module **302** and an audio endpoint devices control module **306.**

The audio stream control module **301** is designed to create and control audio streams. The processes **300** interact with the audio stream control module **301** with the aid of API functions. In one example, the audio stream control module **301** can be the Windows Audio Service **201.**

The audio streams mixing and processing module **302** is connected to the audio stream control module **301** and designed to route the audio streams between the processes **300** and an audio endpoint device from a group of audio endpoint devices **304,** such as the microphone **305.** The audio streams mixing and processing module **302** is also designed for processing of audio streams with the help of audio processing module supported by the system (Audio Processing Objects, APO). In the Windows audio subsystem, one distinguishes the system audio processing module, which are designated by the abbreviation APO, and third-party audio processing module sAPO. For the purposes of the present disclosure, only sAPO shall be used, being called hereinafter simply audio processing module sAPO. As mentioned above, one distinguishes two types of audio processing objects sAPO which are used by the audio streams mixing and processing module **302:** global effects GFX sAPO **502** and local effects LFX sAPO **501.** Within an audio session, including audio data capture streams, the global effects audio processing objects GFX sAPO **502** are applied to the incoming audio stream received from the microphone **305.** Then, for each process, such as the process N, having requested the audio stream control module **301** to create an audio stream, the audio streams mixing and processing module **302** creates an independent audio stream by copying the incoming stream which was processed with the aid of the global effects audio processing object GFX sAPO **502.** Each independent audio stream corresponds to one of the processes **300** and is processed with the help of the local effects audio processing objects LFX sAPO **501.** The audio streams mixing and processing module **302** transmits the audio data from the audio endpoint device, such as the microphone **305,** to the processes **300** by separate buffers **503,** into which the audio streams mixing and processing module **302** writes the audio data, and the processes **300** with the help of a call for an API function read this data. In one example, the audio streams mixing and processing module **302** can be the protected process Windows Audio Device Graph Isolation **202.**

The audio endpoint devices control module **306** performs the adding and keeping track of audio endpoint devices. In one example, the audio endpoint devices control module **306** can be the Windows Audio Endpoint Builder service **204.**

The subsystem for protected transmission of audio data **62** may include an RPC traffic filtration module **310** and an audio streams cryptographic protection module **500,** and it may additionally contain an access authorization module **312.** The RPC traffic filtration module **310** carries out a monitoring of RPC traffic between the audio stream control module **301** and the audio streams mixing and processing module **302.** The RPC traffic filtration module **310** is designed to detect RPC requests for creation of audio streams related to an audio endpoint device, such as the microphone **305.** The RPC traffic filtration module **310** is connected to the audio streams cryptographic protection module **500** and is used within the subsystem for protected transmission of audio data **62** in order to track all RPC requests for creation of audio streams related to any audio endpoint device which is a microphone. The RPC traffic filtration module **310** determines the process identifiers (PID) and stores a set of identifiers {PID 1, ..., PID N} corresponding to a set of processes **300** {process 1, ..., process N} for which the creation of audio streams related to an audio endpoint device, such as the microphone **305,** is being requested. Thus, the RPC traffic filtration module **310** allows the subsystem of protected transmission of audio data **62** to identify all processes **300** which at the current moment have access to any audio endpoint device which is a microphone.

The audio streams cryptographic protection module **500** is connected to the RPC traffic filtration module **310** and designed to encrypt and decrypt the audio data within the audio streams mixing and processing module **302.** For the encrypting of audio data, the audio streams cryptographic protection module **500** uses audio processing module sAPO realized in the form of drivers, which are installed in the operating system and registered in relation to each specific audio endpoint device which is a microphone from the group of audio endpoint devices **304** by adding the corresponding records to the system registry. After installation, the global effects audio processing objects GFX sAPO **502** are automatically applied by the audio streams mixing and processing module **302** to the incoming audio stream obtained via the memory buffer **303** from the audio endpoint device which is a microphone, while the local effects audio processing objects LFX sAPO **501** are used for the processing of each new audio stream related to the same audio endpoint device which is a microphone for which said local effects and global effects audio processing objects LFX sAPO **501** and GFX sAPO **502** have been installed. The encryption algorithm can be partly or wholly realized within the audio processing module sAPO such that the encryption can be done independently by the local effects audio processing object LFX sAPO **501** or by the global effects audio processing object GFX sAPO **502,** or so that the encryption is done by a combination of local effects and global effects audio processing objects LFX sAPO **501** and GFX sAPO **502.** As the encryption algorithms, one can employ both symmetrical encryption algorithms such as AES, DES, GOST 28147-89, and asymmetrical encryption algorithms such as RSA, El-Gamal. Symmetrical encryption calls for the use of an identical key for both encryption and decryption. Asymmetrical encryption calls for the use of a pair of keys, public and private. The public key is transmitted by a public communications channel (not hidden) and is used for encryption of the data. For the decryption of the data, the second, private key is used. The audio streams cryptographic protection module **500** generates the keys, stores them and transmits the keys to the audio processing module sAPO for encryption.

The data encrypted with the aid of the audio streams cryptographic protection module **500** arrives in the memory buffers **503.** Each memory buffer from a group of memory buffers **503** {memory buffer 1, ..., memory buffer N} corresponds to a process from a group of processes **300** {process 1, ..., process N}, which at the current moment have access to the audio endpoint device which is a microphone. The memory buffers are created by the audio stream control module **301** for each process requesting the creation of an audio stream. With the aid of the memory buffers **503,** the audio streams mixing and processing module **302** transmits to the processes the audio data arriving from the audio endpoint device which is a microphone. It is in fact the memory buffers **503** which are the most likely location of audio data leaks on its path from the audio endpoint device, which is a microphone, to the processes **300.** To obtain audio data from the memory buffers **503,** the processes **300** use API functions, especially WASAPI functions, by which the processes **300** read the audio data from the memory buffers **503,** moving the read audio data to the local memory buffers **505,** for example, for its later processing and use. To accomplish the decryption of the audio data, the audio streams cryptographic protection module **500** installs interceptors of the call of that API function by which the processes **300** read audio data from the memory buffers **503.** These interceptors are installed by the audio streams cryptographic protection module **500** only for those processes whose identifiers have been determined by the RPC traffic filtration module **310.** For example, according to **Fig. 5****,** for the process N having the identifier PID N there is installed an interceptor of the call of the API function **504.**

The technology for intercepting calls of API functions is known from conventional systems and method and involves various approaches which can be employed in the context of the present disclosure. According to one of the approaches, based on the fact that the calls of any given API functions in the process N from third-party DLLs are executed through a function import table. This table is filled out when loading the DLL into the process N, and there are written therein the addresses of all functions being imported which may be needed by the process N, including the API function by which the process N reads the audio data from the memory buffer N. Accordingly, to install the interceptor of the call of the API function **504** the audio streams cryptographic protection module **500** finds the import table, and in it the API function whose call needs to be intercepted, and places in the found import table a pointer to another function instead of the original API function. The other function whose pointer has been placed in the import table instead of the original API function is a modified original API function allowing the process N to read the audio data from the memory buffer N, being distinguished in that it additionally contains a call for the routine of decryption of the audio data being read, to be executed by the audio streams cryptographic protection module **500.** After completion of this routine, the decrypted audio data are transmitted to the process N.

In one example, the decryption of the audio data located for example in memory buffer N can be done without an interceptor. The process N can independently interact with the subsystem for protected transmission of audio data **62** by special program interfaces, such as KL API (Kasperksy Lab Application Programming Interfaces), which are provided in the form of a Software Development Kit (SDK). Thus, the process N can not only independently call for the decryption routine to be carried out by the audio streams cryptographic protection module **500,** but also interact with the audio streams cryptographic protection module **500** for the calling of routines to encrypt the audio data and routines to generate and exchange the keys used for the encryption and decryption of the audio data, and also interact with other components of the subsystem for protected transmission of audio data **62** to ensure the security of the audio data arriving from the audio endpoint device, being a microphone, at the process N.

The access authorization module **312** within the subsystem of protected transmission of audio data **62** is connected to the cryptographic protection module **500** and the RPC traffic filtration module **310** and is designed to check the authorization of the processes by the process identifiers, as determined by the RPC traffic filtration module **310,** for granting access to the audio endpoint device which is a microphone. Thus, with the use of the access authorization module **312** in one example the audio streams cryptographic protection module **500** can establish interceptors of a call for the API function only for those processes which have been identified as a result of the aforementioned verification by the access authorization module **312** as being authorized to gain access to the audio endpoint device which is a microphone. As a result of this, encrypted audio data will go to unauthorized processes from the audio streams mixing and processing module **302.**

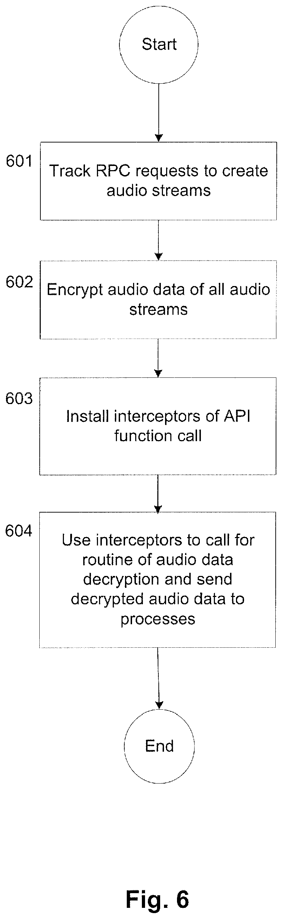

**Fig. 6** illustrates a flowchart for an example of method of protected transmission of audio data from a microphone to processes. According to this flowchart, in step **601** the RPC traffic filtration module **310,** designed to monitor the RPC traffic between the audio stream control module **301** and the audio streams mixing and processing module **302,** tracks the RPC requests for creation of audio streams related to each audio endpoint device which is a microphone, in order to determine the identifiers of all the processes gaining access to said microphone.

Next, in step **602,** the audio data of all the audio streams within the audio streams mixing and processing module **302** is encrypted by the audio streams cryptographic protection module **500.** For the encryption of the audio data, the audio streams cryptographic protection module **500** uses audio processing module (APO) which are subdivided into two types of objects: global effects audio processing module GFX sAPO **502** and local effects audio processing module LFX sAPO **501.**

The audio streams mixing and processing module **302** places the encrypted audio data into memory buffers **503.** Each memory buffer from a group of memory buffers **503** {memory buffer 1, ..., memory buffer N} corresponds to a process from a group of processes **300** {process 1, ..., process N}, which at the current moment have access to the audio endpoint device which is a microphone.

For the decryption of the audio data, the cryptographic protection module **500** in step **603** installs interceptors of the call for the API function by which the processes **300** read the audio data from the corresponding memory buffers **503** which are used by the audio streams mixing and processing module **302** for the transmission of audio data from the audio endpoint device which is a microphone to the processes **300.** The installing of interceptors by the cryptographic protection module **500** is done for those processes **300** whose identifiers were determined by the RPC traffic filtration module in step **601.**

In one example, the audio streams cryptographic protection module **500** installs interceptors of the call for the API function only for those processes of the group of processes 300 which have been identified as a result of the checking by the access authorization module **312** as authorized to have access to the audio endpoint device which is a microphone. The access authorization module **312** performs the checking of the authorization of the processes **300** for access to the audio endpoint device which is a microphone according to their identifiers which were determined by the RPC traffic filtration module **310.**

And in step **604** the aforementioned interceptors are used to call for a routine of decryption of audio data, which is executed by the audio streams cryptographic protection module **500,** after which the decrypted audio data is transmitted to the processes.

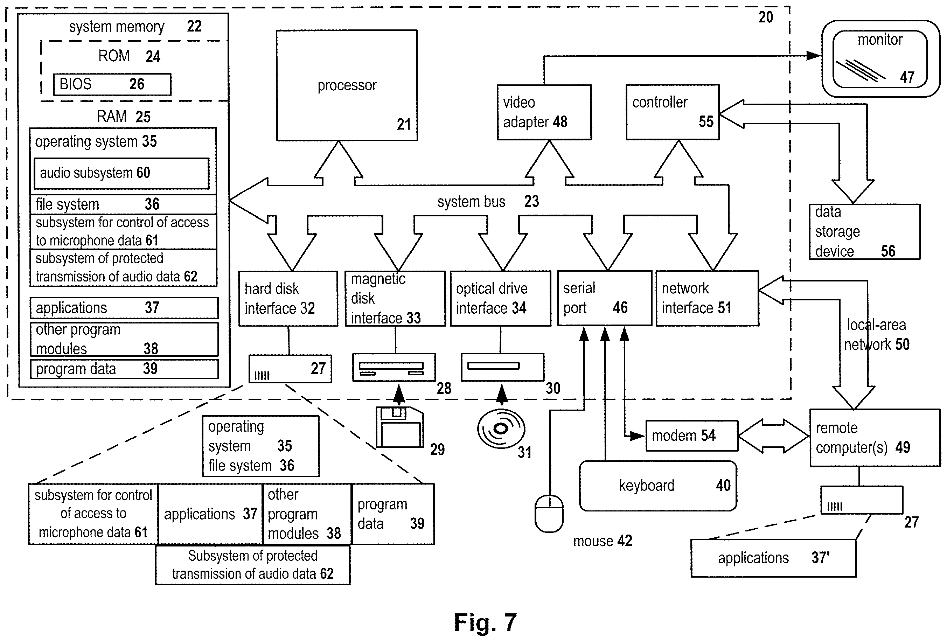

**Fig. 7** illustrates an example of a general-purpose computer system (which may be a personal computer or a server) on which the disclosed systems (including one or more of the modules) and the method can be implemented according to an example aspect. As shown, the computer system 20 may include a central processing unit 21, a system memory 22 and a system bus 23 connecting the various system components, including the memory associated with the central processing unit 21. The system bus 23 is realized like any bus structure known from the prior art, including in turn a bus memory or bus memory controller, a peripheral bus and a local bus, which is able to interact with any other bus architecture. The system memory includes read only memory (ROM) 24 and random-access memory (RAM) 25. The basic input/output system (BIOS) 26 includes the basic procedures ensuring the transfer of information between elements of the personal computer 20, such as those at the time of loading the operating system with the use of the ROM 24.

The personal computer 20, in turn, includes a hard disk 27 for reading and writing of data, a magnetic disk drive 28 for reading and writing on removable magnetic disks 29 and an optical drive 30 for reading and writing on removable optical disks 31, such as CD-ROM, DVD-ROM and other optical information media. The hard disk 27, the magnetic disk drive 28, and the optical drive 30 are connected to the system bus 23 across the hard disk interface 32, the magnetic disk interface 33 and the optical drive interface 34, respectively. The drives and the corresponding computer information media are power-independent modules for storage of computer instructions, data structures, program modules and other data of the personal computer 20.

The present disclosure provides the implementation of a system that uses a hard disk 27, a removable magnetic disk 29 and a removable optical disk 31, but it should be understood that it is possible to employ other types of computer information media 56 which are able to store data in a form readable by a computer (solid state drives, flash memory cards, digital disks, random-access memory (RAM) and so on), which are connected to the system bus 23 via the controller 55.

The computer 20 has a file system 36, where the recorded operating system 35 is stored, which in turn contains audio subsystem 60, depicted in Fig. 2, as well as subsystem for control of access to microphone data 61, depicted in Fig. 3, as well as the subsystem for protected transmission of audio data 62, and also additional program applications 37, other program modules 38 and program data 39. The user is able to enter commands and information into the personal computer 20 by using input devices (keyboard 40, mouse 42). Other input devices (not shown) can be used: microphone, joystick, game controller, scanner, and so on. Such input devices usually plug into the computer system 20 through a serial port 46, which in turn is connected to the system bus, but they can be connected in other ways, for example, with the aid of a parallel port, a game port or a universal serial bus (USB). A monitor 47 or other type of display device is also connected to the system bus 23 across an interface, such as a video adapter 48. In addition to the monitor 47, the personal computer can be equipped with other peripheral output devices (not shown), such as loudspeakers, a printer, and so on.

The personal computer 20 is able to operate within a network environment, using a network connection to one or more remote computers 49. The remote computer (or computers) 49 are also personal computers or servers having the majority or all of the aforementioned elements in describing the nature of a personal computer 20, as shown in Fig. 7. Other devices can also be present in the computer network, such as routers, network stations, peer devices or other network nodes.

Network connections can form a local-area computer network (LAN) 50, such as a wired and/or wireless network, and a wide-area computer network (WAN). Such networks are used in corporate computer networks and internal company networks, and they generally have access to the Internet. In LAN or WAN networks, the personal computer 20 is connected to the local-area network 50 across a network adapter or network interface 51. When networks are used, the personal computer 20 can employ a modem 54 or other modules for providing communications with a wide-area computer network such as the Internet. The modem 54, which is an internal or external device, is connected to the system bus 23 by a serial port 46. It should be noted that the network connections are only examples and need not depict the exact configuration of the network, i.e., in reality there are other ways of establishing a connection of one computer to another by technical communication modules, such as Bluetooth.

In various aspects, the systems and methods described herein may be implemented in hardware, software, firmware, or any combination thereof. If implemented in software, the methods may be stored as one or more instructions or code on a non-transitory computer-readable medium. Computer-readable medium includes data storage. By way of example, and not limitation, such computer-readable medium can comprise RAM, ROM, EEPROM, CD-ROM, Flash memory or other types of electric, magnetic, or optical storage medium, or any other medium that can be used to carry or store desired program code in the form of instructions or data structures and that can be accessed by a processor of a general purpose computer.

As noted above, in various aspects, the systems and methods described in the present disclosure in terms of modules. It is reiterates that the term "module" as used herein refers to a real-world device, component, or arrangement of components implemented using hardware, such as by an application specific integrated circuit (ASIC) or field-programmable gate array (FPGA), for example, or as a combination of hardware and software, such as by a microprocessor system and a set of instructions to implement the module's functionality, which (while being executed) transform the microprocessor system into a special-purpose device. A module can also be implemented as a combination of the two, with certain functions facilitated by hardware alone, and other functions facilitated by a combination of hardware and software. In certain implementations, at least a portion, and in some cases, all, of a module can be executed on the processor of a general purpose computer (such as the one described in greater detail in Fig. 7 above). Accordingly, each module can be realized in a variety of suitable configurations, and should not be limited to any example implementation exemplified herein.

In the interest of clarity, not all of the routine features of the aspects are disclosed herein. It will be appreciated that in the development of any actual implementation of the present disclosure, numerous implementation-specific decisions must be made in order to achieve the developer's specific goals, and that these specific goals will vary for different implementations and different developers. It will be appreciated that such a development effort might be complex and time-consuming, but would nevertheless be a routine undertaking of engineering for those of ordinary skill in the art having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of the skilled in the relevant art(s). Moreover, it is not intended for any term in the specification or claims to be ascribed an uncommon or special meaning unless explicitly set forth as such.

The various aspects disclosed herein encompass present and future known equivalents to the known modules referred to herein by way of illustration. Moreover, while aspects and applications have been shown and described, it would be apparent to those skilled in the art having the benefit of this disclosure that many more modifications than mentioned above are possible without departing from the inventive concepts disclosed herein.

## Claims

1. A method for preventing unauthorized access to audio data, the method comprising:
receiving, by a processor (21) of the computer, a request from one software process (300) of a plurality of software processes to obtain an audio stream from an audio endpoint device (305);
allocating, by the processor (21), a data buffer (503) of a plurality of data buffers for the one software process (300);
processing and encrypting audio data received from the audio endpoint device (305) by at least one audio processing object (501, 502), wherein the audio data is associated with the requested audio stream;
storing, by the processor (21), the encrypted audio data in the allocated data buffer (503);
responsive to determining, based on a process identifier associated with the one software process (300), that the one software process is authorized to obtain the audio stream from the audio endpoint device (305), installing an interceptor (504) of a API function call for the one software process (300), wherein installation of the interceptor (504) of the API function call comprises:
determining an import table associated with a library used by the one software process (300) and having the API function call;
storing in the import table a pointer to the interceptor (504) instead of an original function for the API function call, wherein the interceptor (504) is configured to allow the one software process (300) to read the encrypted audio data in the allocated data buffer; and
decrypting the encrypted audio data from the allocated data buffer (503) by the one software process using the interceptor (504) of the API function call.

2. The method according to claim 1, further comprising:
receiving, by the processor (21) of the computer, a plurality of requests from the plurality of software processes (300), respectively, to obtain audio streams from one or more audio endpoint devices (304) including the audio endpoint device (305);
allocating, by the processor (21), the plurality of data buffers (503) for the plurality of software processes (300);
encrypting audio data associated with each of the requested audio streams;
storing the encrypted audio data for each of the requested audio streams in the allocated data buffer (503), respectively; and
decrypting the encrypted audio data for each of the requested audio streams by at least a portion of the plurality of software processes that have been configured with a respective interceptor (504) of a API function call.

3. The method according to any of claims 1 to 2, further comprising:
determining, by the processor, the process identifier for the one software process (300).

4. The method according to any of claims 1 to 3, wherein the determining of whether the software process is authorized to obtain the audio stream comprises at least one of:
monitoring activities of the requesting process (300) to determine whether the process (300) is trusted or not trusted;
scanning the requesting process (300) by accessing a database of signatures of known viruses and comparing a signature of the requesting process (300); and
receiving, from a user, a command whether to grant access to the audio stream by the requesting process (300).

5. The method according to any of claims 1 to 4, further comprising:
directly storing the audio data received from the audio endpoint device (305) in a separate data buffer (303); and
only granting access to the audio data by the one software process (300) after the audio data has been encrypted and the process identifier indicates the one software process (300) is not an unauthorized software process.

6. The method according to any of claims 1 to 5, wherein the processing of the audio data device by the at least one audio processing object comprises processing the audio data by a global effects audio processing object (502) allocated for the plurality of software processes (300) and a local effects audio processing object (501) associated with the one software process (300).

7. The method according to any of claims 1 to 6, wherein the encrypting of the audio data comprises encrypting the audio data by one of a symmetrical encryption algorithm and an asymmetrical encryption algorithm.

8. A system for preventing unauthorized access to audio data, the system comprising:
a plurality of data buffer (503) in an electronic memory (25); and
a processor (21) configured to:
receive a request from one software process (300) of a plurality of software processes to obtain an audio stream from an audio endpoint device (305);
allocate a data buffer (503) of the plurality of data buffers for the one software process (300);
process and encrypt audio data received from the audio endpoint device (305) by at least one audio processing object (501, 502), wherein the audio data is associated with the requested audio stream;
store the encrypted audio data in the allocated data buffer (503);
responsive to determining, based on a process identifier associated with the one software process (300), that the one software process (300) is authorized to obtain the audio stream from the audio endpoint device (305), install an interceptor (504) of a API function call for the one software process (300), wherein installation of the interceptor (504) of the API function call comprises:
determining an import table associated with a library used by the one software process (300) and having the API function call;
storing in the import table a pointer to the interceptor (504) instead of an original function for the API function call, wherein the interceptor (504) is configured to allow the one software process (300) to read the encrypted audio data in the allocated data buffer (503); and
decrypting the encrypted audio data from the allocated data buffer (503) by the one software process (300) using the interceptor (504) of the API function call.

9. The system according to claim 8, wherein the processor (21) is further configured to:
receive a plurality of requests from the plurality of software processes (300), respectively, to obtain audio streams from one or more audio endpoint devices (304) including the audio endpoint device (305);
allocate the plurality of data buffers (503) for the plurality of software processes (300);
encrypt audio data associated with each of the requested audio streams;
store the encrypted audio data for each of the requested audio streams in the allocated data buffer (503), respectively; and
decrypt the encrypted audio data for each of the requested audio streams by at least a portion of the plurality of software processes (300) that have been configured with a respective interceptor (504) of a API function call.

10. The system according to any of claims 8 to 9, wherein the processor (21) is further configured to:
determine the process identifier for the one software process (300).

11. The system according to any of claims 8 to 10, wherein the processor (21) is further configured to determine whether the software process is authorized to obtain the audio stream by performing at least one of:
monitoring activities of the requesting process (300) to determine whether the process (300) is trusted or not trusted;
scanning the requesting process (300) by accessing a database of signatures of known viruses and comparing a signature of the requesting process (300); and
receiving, from a user, a command whether to grant access to the audio stream by the requesting process (300).

12. The system according to any of claims 8 to 11, wherein the processor (21) is further configured to:
directly store the audio data received from the audio endpoint device (305) in a separate data buffer (303); and
only grant access to the audio data by the one software process (300) after the audio data has been encrypted and the process identifier indicates the one software process (300) is not an unauthorized software process.

13. The system according to any of claims 8 to 12, wherein the processor (21) is further configured to process the audio data device by the at least one audio processing object by first processing the audio data by a global effects audio processing object (502) allocated for the plurality of software processes and then processing the audio data by a local effects audio processing object (501) associated with the one software process (300).

14. The system according to any of claims 8 to 13, wherein the processor (21) is further configured to encrypt the audio data by one of a symmetrical encryption algorithm and an asymmetrical encryption algorithm.

15. A computer program product stored on a non-transitory computer-readable storage medium, the computer program product comprising computer-executable instructions for performing the method of claims 1-7.

## Patentansprüche

1. Verfahren zum Verhindern von unautorisiertem Zugang zu Audiodaten, wobei das Verfahren umfasst:
Empfangen, durch einen Prozessor (21) des Computers, einer Anfrage von einem Softwareprozess (300) von einer Vielzahl von Softwareprozessen, um einen Audiostream von einer Audio-Endpunktvorrichtung (305) zu erhalten;
Zuweisen, durch den Prozessor (21), eines Datenpuffers (503) einer Vielzahl von Datenpuffern für den einen Softwareprozess (300);
Verarbeiten und Verschlüsseln von von der Audio-Endpunktvorrichtung (305) empfangenen Audiodaten durch wenigstens ein Audioverarbeitungsobjekt (501, 502), wobei die Audiodaten dem angefragten Audiostream zugeordnet werden;
Speichern, durch den Prozessor (21), der verschlüsselten Audiodaten in dem zugewiesenen Datenpuffer (503);
in Reaktion auf das Bestimmen, auf der Basis einer Prozesskennung, die dem einen Softwareprozess (300) zugeordnet ist, dass der eine Softwareprozess autorisiert ist, den Audiostream von der Audio-Endpunktvorrichtung (305) zu erhalten, Installieren eines Interceptors (504) eines API-Funktionsaufrufs für den einen Softwareprozess (300), wobei die Installation des Interceptors (504) des API-Funktionsaufrufs umfasst:
Bestimmen einer Importtabelle, die einer Bibliothek zugeordnet ist, die von dem einen Softwareprozess (300) verwendet wird und den API-Funktionsaufruf aufweist;
Speichern in der Importtabelle eines Hinweises auf den Interceptor (504) anstatt einer Originalfunktion für den API-Funktionsaufruf, wobei der Interceptor (504) dazu konfiguriert ist, dem einen Softwareprozess (300) zu erlauben, die verschlüsselten Audiodaten in dem zugewiesenen Datenspeicher zu lesen; und
Entschlüsseln der verschlüsselten Audiodaten von dem zugewiesenen Datenspeicher (503) durch den einen Softwareprozess unter Verwendung des Interceptors (504) des API-Funktionsaufrufs.

2. Verfahren nach Anspruch 1, ferner umfassend:
Empfangen, durch den Prozessor (21) des Computers, einer Vielzahl von Anfragen jeweils von der Vielzahl von Softwareprozessen (300), um Audiostreams von einer oder mehreren Audio-Endpunktvorrichtungen (304), die die Audio-Endpunktvorrichtung (305) umfassen, zu erhalten;
Zuweisen, durch den Prozessor (21), der Vielzahl von Datenpuffern (503) für die Vielzahl von Softwareprozessen (300);
Verschlüsseln von jedem der angeforderten Audiostreams zugeordneten Audiodaten;
Speichern der verschlüsselten Audiodaten für jeden der angeforderten Audiostreams jeweils in dem zugewiesenen Datenpuffer (503); und
Entschlüsseln der verschlüsselten Audiodaten für jeden der angeforderten Audiostreams durch wenigstens einen Teil der Vielzahl von Softwareprozessen, die mit einem jeweiligen Interceptor (504) eines API-Funktionsaufrufs konfiguriert wurden.

3. Verfahren nach einem der Ansprüche 1 bis 2, ferner umfassend:
Bestimmen, durch den Prozessor, der Prozesskennung für den einen Softwareprozess (300).

4. Verfahren nach einem der Ansprüche 1 bis 3, wobei das Bestimmen, ob der Softwareprozess autorisiert ist, den Audiostream zu erhalten, wenigstens eines umfasst von:
Überwachen von Aktivitäten des Anfrageprozesses (300), um zu bestimmen, ob der Prozess (300) vertrauenswürdig oder nicht vertrauenswürdig ist;
Scannen des Anfrageprozesses (300) durch Zugriff auf eine Datenbank von Signaturen von bekannten Viren und Vergleichen mit einer Signatur des Anfrageprozesses (300); und
Empfangen, von einem Benutzer, eines Befehls, ob dem Anfrageprozess (300) Zugang zu dem Audiostream gewährt werden soll.

5. Verfahren nach einem der Ansprüche 1 bis 4 ferner umfassend:
direktes Speichern der von der Audio-Endpunktvorrichtung (305) erhaltenen Audiodaten in einem separaten Datenpuffer (303); und
erst dann Gewähren eines Zugangs zu den Audiodaten durch den einen Softwareprozess (300), nachdem die Audiodaten verschlüsselt wurden und die Prozesskennung anzeigt, dass der eine Softwareprozess (300) kein unautorisierter Softwareprozess ist.

6. Verfahren nach einem der Ansprüche 1 bis 5, wobei das Verarbeiten der Audiodatenvorrichtung durch das wenigstens eine Audioverarbeitungsobjekt das Verarbeiten der Audiodaten durch ein globales Effekte-Audioverarbeitungsobjekt (502), das der Vielzahl von Softwareprozessen (300) zugewiesen ist, und ein lokales Effekte-Audioverarbeitungsobjekt (501) umfasst, das dem einen Softwareprozess (300) zugeordnet ist.

7. Verfahren nach einem der Ansprüche 1 bis 6, wobei das Verschlüsseln der Audiodaten das Verschlüsseln der Audiodaten durch einen von einem symmetrischen Verschlüsselungs-Algorithmus und einem asymmetrischen Verschlüsselungs-Algorithmus umfasst.

8. System zum Verhindern von unautorisiertem Zugang zu Audiodaten, wobei das System umfasst:
eine Vielzahl von Datenpuffern (503) in einem elektronischen Speicher (25); und
einen Prozessor (21), der dazu konfiguriert ist,
eine Anfrage von einem Softwareprozess (300) von einer Vielzahl von Softwareprozessen zu empfangen, um einen Audiostream von einer Audio-Endpunktvorrichtung (305) zu erhalten;
einen Datenpuffer (503) von der Vielzahl von Datenpuffern dem einen Softwareprozess (300) zuzuweisen;
von der Audio-Endpunktvorrichtung (305) empfangene Audiodaten durch wenigstens ein Audioverarbeitungsobjekt (501, 502) zu verarbeiten und zu verschlüsseln, wobei die Audiodaten dem angefragten Audiostream zugeordnet werden;
die verschlüsselten Audiodaten in dem zugewiesenen Datenpuffer (503) zu speichern;
in Reaktion auf das Bestimmen, auf der Basis einer Prozesskennung, die dem einen Softwareprozess (300) zugeordnet ist, dass der eine Softwareprozess autorisiert ist, den Audiostream von der Audio-Endpunktvorrichtung (305) zu erhalten, einen Interceptor (504) eines API-Funktionsaufrufs für den einen Softwareprozess (300) zu installieren, wobei die Installation des Interceptors (504) des API-Funktionsaufrufs umfasst:
Bestimmen einer Importtabelle, die einer Bibliothek zugeordnet ist, die von dem einen Softwareprozess (300) verwendet wird und den API-Funktionsaufruf aufweist;
Speichern in der Importtabelle eines Hinweises auf den Interceptor (504) anstatt einer Originalfunktion für den API-Funktionsaufruf, wobei der Interceptor (504) dazu konfiguriert ist, dem einen Softwareprozess (300) zu erlauben, die verschlüsselten Audiodaten in dem zugewiesenen Datenspeicher zu lesen; und
Entschlüsseln der verschlüsselten Audiodaten von dem zugewiesenen Datenspeicher (503) durch den einen Softwareprozess unter Verwendung des Interceptors (504) des API-Funktionsaufrufs.

9. System nach Anspruch 8, wobei der Prozessor (21) ferner dazu konfiguriert ist,
eine Vielzahl von Anfragen jeweils von der Vielzahl von Softwareprozessen (300) zu empfangen, um Audiostreams von einer oder mehreren Audio-Endpunktvorrichtungen (304), die die Audio-Endpunktvorrichtung (305) umfassen, zu erhalten;
die Vielzahl von Datenpuffern (503) der Vielzahl von Softwareprozessen (300) zuzuweisen;
jedem der angeforderten Audiostreams zugeordnete Audiodaten zu verschlüsseln;
die verschlüsselten Audiodaten für jeden der angeforderten Audiostreams jeweils in dem zugewiesenen Datenpuffer (503) zu speichern; und
die verschlüsselten Audiodaten für jeden der angeforderten Audiostreams durch wenigstens einen Teil der Vielzahl von Softwareprozessen (300) zu entschlüsseln, die mit einem jeweiligen Interceptor (504) eines API-Funktionsaufrufs konfiguriert wurden.

10. System nach einem der Ansprüche 8 bis 9, wobei der Prozessor (21) ferner dazu konfiguriert ist,
die Prozesskennung für den einen Softwareprozess (300) zu bestimmen.

11. System nach einem der Ansprüche 8 bis 10, wobei der Prozessor (21) ferner dazu konfiguriert ist, zu bestimmen, ob der Softwareprozess autorisiert ist, den Audiostream zu erhalten, durch Durchführung von wenigstens einem von:
Überwachen von Aktivitäten des Anfrageprozesses (300), um zu bestimmen, ob der Prozess (300) vertrauenswürdig oder nicht vertrauenswürdig ist;
Scannen des Anfrageprozesses (300) durch Zugriff auf eine Datenbank von Signaturen von bekannten Viren und Vergleichen mit einer Signatur des Anfrageprozesses (300); und
Empfangen, von einem Benutzer, eines Befehls, ob dem Anfrageprozess (300) Zugang zu dem Audiostream gewährt werden soll.

12. System nach einem der Ansprüche 8 bis 11, wobei der Prozessor (21) ferner dazu konfiguriert ist,
die von der Audio-Endpunktvorrichtung (305) erhaltenen Audiodaten in einem separaten Datenpuffer (303) direkt zu speichern; und
erst dann einen Zugang zu den Audiodaten durch den einen Softwareprozess (300) zu gewähren, nachdem die Audiodaten verschlüsselt wurden und die Prozesskennung anzeigt, dass der eine Softwareprozess (300) kein unautorisierter Softwareprozess ist.

13. System nach einem der Ansprüche 8 bis 12, wobei der Prozessor (21) ferner dazu konfiguriert ist, die Audiodatenvorrichtung durch das wenigstens eine Audioverarbeitungsobjekt zu verarbeiten, indem erst die Audiodaten durch ein globales Effekte-Audioverarbeitungsobjekt (502), das der Vielzahl von Softwareprozessen (300) zugewiesen ist, verarbeitet werden, und die Audiodaten dann durch ein lokales Effekte-Audioverarbeitungsobjekt (501) verarbeitet werden, das dem einen Softwareprozess (300) zugeordnet ist.

14. System nach einem der Ansprüche 8 bis 13, wobei der Prozessor (21) ferner dazu konfiguriert ist, die Audiodaten durch einen von einem symmetrischen Verschlüsselungs-Algorithmus und einem asymmetrischen Verschlüsselungs-Algorithmus zu verschlüsseln.

15. Computerprogrammprodukt, das auf einem nichtflüchtigen computerlesbaren Speichermedium gespeichert ist, wobei das Computerprogrammprodukt computerausführbare Instruktionen zum Durchführen des Verfahrens der Ansprüche 1-7 umfasst.

## Revendications

1. Un procédé destiné à empêcher un accès non autorisé à des données audio, le procédé comprenant :
la réception, par un processeur (21) de l'ordinateur, d'une demande à partir d'un processus logiciel (300) d'une pluralité de processus logiciels d'obtention d'un flux audio à partir d'un dispositif de point d'extrémité audio (305),
l'attribution, par le processeur (21), d'une mémoire tampon de données (503) d'une pluralité de mémoires tampons de données audit processus logiciel (300),
le traitement et le chiffrement de données audio reçues du dispositif de point d'extrémité audio (305) par au moins un objet de traitement audio (501, 502), les données audio étant associées au flux audio demandé,
la conservation en mémoire, par le processeur (21), des données audio chiffrées dans la mémoire tampon de données attribuée (503),
en réponse à la détermination, en fonction d'un identifiant de processus associé audit processus logiciel (300), que ledit processus logiciel est autorisé à obtenir le flux audio à partir du dispositif de point d'extrémité audio (305), l'installation d'un intercepteur (504) d'un appel de fonction API pour ledit processus logiciel (300), l'installation de l'intercepteur (504) de l'appel de fonction API comprenant :
la détermination d'une table d'importation associée à une bibliothèque utilisée par ledit processus logiciel (300) et possédant l'appel de fonction API,
la conservation en mémoire dans la table d'importation d'un pointeur vers l'intercepteur (504) au lieu d'une fonction d'origine pour l'appel de fonction API, l'intercepteur (504) étant configuré de façon à permettre audit processus logiciel (300) de lire les données audio chiffrées dans la mémoire tampon de données attribuée, et
le déchiffrement des données audio chiffrées à partir de la mémoire tampon de données attribuée (503) par ledit processus logiciel au moyen de l'intercepteur (504) de l'appel de fonction API.

2. Le procédé selon la revendication 1, comprenant en outre :
la réception, par le processeur (21) de l'ordinateur, d'une pluralité de demandes à partir de la pluralité de processus logiciels (300), respectivement, d'obtention des flux audios à partir d'un ou de plusieurs dispositifs de point d'extrémité audio (304) comprenant le dispositif de point d'extrémité audio (305),
l'attribution, par le processeur (21), de la pluralité de mémoires tampons de données (503) à la pluralité de processus logiciels (300),
le chiffrement de données audio associées à chacun des flux audio demandés,
la conservation en mémoire des données audio chiffrées pour chacun des flux audio demandés dans la mémoire tampon de données attribuée (503), respectivement, et
le déchiffrement des données audio chiffrées pour chacun des flux audio demandés par au moins une partie de la pluralité de processus logiciels qui ont été configurés avec un intercepteur respectif (504) d'un appel de fonction API.

3. Le procédé selon l'une quelconque des revendications 1 à 2, comprenant en outre :
la détermination, par le processeur, de l'identifiant de processus pour ledit processus logiciel (300).

4. Le procédé selon l'une quelconque des revendications 1 à 3, dans lequel la détermination si le processus logiciel est autorisé à obtenir le flux audio comprend au moins une étape parmi :
la surveillance d'activités du processus demandeur (300) de façon à déterminer si le processus (300) est fiable ou non fiable,
le balayage du processus demandeur (300) par l'accès à une base de données de signatures de virus connus et la comparaison d'une signature du processus demandeur (300), et
la réception, à partir d'un utilisateur, d'une commande d'octroi d'un accès au flux audio par le processus demandeur (300).

5. Le procédé selon l'une quelconque des revendications 1 à 4, comprenant en outre :
la conservation en mémoire directement des données audio reçues du dispositif de point d'extrémité audio (305) dans une mémoire tampon de données distincte (303), et
l'octroi d'un accès aux données audio uniquement par ledit processus logiciel (300) après le chiffrement des données audio et l'indication par l'identifiant de processus que ledit processus logiciel (300) n'est pas un processus logiciel non autorisé.

6. Le procédé selon l'une quelconque des revendications 1 à 5, dans lequel le traitement du dispositif de données audio par le au moins un objet de traitement audio comprend le traitement des données audio par un objet de traitement audio à effets globaux (502) attribué à la pluralité de processus logiciels (300) et un objet de traitement audio à effets locaux (501) associé audit processus logiciel (300).

7. Le procédé selon l'une quelconque des revendications 1 à 6, dans lequel le chiffrement des données audio comprend le chiffrement des données audio par un algorithme parmi un algorithme de chiffrement symétrique et un algorithme de chiffrement asymétrique.

8. Un système destiné à empêcher un accès non autorisé à des données audio, le système comprenant :
une pluralité de mémoires tampons de données (503) dans une mémoire électronique (25), et
un processeur (21) configuré de façon à :
recevoir une demande à partir d'un processus logiciel (300) d'une pluralité de processus logiciels d'obtention d'un flux audio à partir d'un dispositif de point d'extrémité audio (305),
attribuer une mémoire tampon de données (503) de la pluralité de mémoires tampons de données audit processus logiciel (300),
traiter et chiffrer des données audio reçues du dispositif de point d'extrémité audio (305) par au moins un objet de traitement audio (501, 502), les données audio étant associées au flux audio demandé,
conserver en mémoire les données audio chiffrées dans la mémoire tampon de données attribuée (503),
en réponse à la détermination, en fonction d'un identifiant de processus associé audit processus logiciel (300), que ledit processus logiciel (300) est autorisé à obtenir le flux audio à partir du dispositif de point d'extrémité audio (305), installer un intercepteur (504) d'un appel de fonction API pour ledit processus logiciel (300), l'installation de l'intercepteur (504) de l'appel de fonction API comprenant :
la détermination d'une table d'importation associée à une bibliothèque utilisée par ledit processus logiciel (300) et possédant l'appel de fonction API,
la conservation en mémoire dans la table d'importation d'un pointeur vers l'intercepteur (504) au lieu d'une fonction d'origine pour l'appel de fonction API, l'intercepteur (504) étant configuré de façon à permettre audit processus logiciel (300) de lire les données audio chiffrées dans la mémoire tampon de données attribuée (503), et
le déchiffrement des données audio chiffrées à partir de la mémoire tampon de données attribuée (503) par ledit processus logiciel (300) au moyen de l'intercepteur (504) de l'appel de fonction API.

9. Le système selon la revendication 8, dans lequel le processeur (21) est configuré en outre de façon à :
recevoir une pluralité de demandes à partir de la pluralité de processus logiciels (300), respectivement, d'obtention de flux audio à partir d'un ou de plusieurs dispositifs de point d'extrémité audio (304) comprenant le dispositif de point d'extrémité audio (305),
attribuer la pluralité de mémoires tampons de données (503) à la pluralité de processus logiciels (300),
chiffrer des données audio associées à chacun des flux audio demandés,
conserver en mémoire les données audio chiffrées pour chacun des flux audio demandés dans la mémoire tampon de données attribuée (503), respectivement, et
déchiffrer les données audio chiffrées pour chacun des flux audio demandés par au moins une partie de la pluralité de processus logiciels (300) qui ont été configurés avec un intercepteur respectif (504) d'un appel de fonction API.

10. Le système selon l'une quelconque des revendications 8 à 9, dans lequel le processeur (21) est configuré en outre de façon à :
déterminer l'identifiant de processus pour ledit processus logiciel (300).

11. Le système selon l'une quelconque des revendications 8 à 10, dans lequel le processeur (21) est configuré en outre de façon à déterminer si le processus logiciel est autorisé à obtenir le flux audio par l'exécution d'au moins une étape parmi :
la surveillance d'activités du processus demandeur (300) de façon à déterminer si le processus (300) est fiable ou non fiable,
le balayage du processus demandeur (300) par l'accès à une base de données de signatures de virus connus et la comparaison d'une signature du processus demandeur (300), et
la réception, à partir d'un utilisateur, d'une commande d'octroi d'un accès au flux audio par le processus demandeur (300).

12. Le système selon l'une quelconque des revendications 8 à 11, dans lequel le processeur (21) est configuré en outre de façon à :
conserver en mémoire directement les données audio reçues du dispositif de point d'extrémité audio (305) dans une mémoire tampon de données distincte (303), et
octroyer un accès aux données audio uniquement par ledit processus logiciel (300) après le chiffrement des données audio et l'indication par l'identifiant de processus que ledit processus logiciel (300) n'est pas un processus logiciel non autorisé.

13. Le système selon l'une quelconque des revendications 8 à 12, dans lequel le processeur (21) est configuré en outre de façon à traiter le dispositif de données audio par le au moins un objet de traitement audio par un traitement en premier lieu des données audio par un objet de traitement audio à effets globaux (502) attribué à la pluralité de processus logiciels et ensuite par le traitement des données audio par un objet de traitement audio à effets locaux (501) associé audit processus logiciel (300).

14. Le système selon l'une quelconque des revendications 8 à 13, dans lequel le processeur (21) est configuré en outre de façon à chiffrer les données audio par un algorithme parmi un algorithme de chiffrement symétrique et un algorithme de chiffrement asymétrique.

15. Un produit de programme informatique conservé en mémoire sur un support à mémoire lisible par ordinateur non transitoire, le produit de programme informatique comprenant des instructions exécutables par ordinateur destinées à l'exécution du procédé selon les revendications 1 à 7.
